# EUROPEAN PATENT APPLICATION

(11) **EP 4 631 803 A1**
(43) Date of publication of application: **15.10.2025**
(21) Application number: 23902087.8
(22) Date of filing: 30.06.2023
(51) Int. Cl.: B60T 11/18, B60T 13/12

(54) **BRAKE, BRAKE SYSTEM AND VEHICLE**

(30) Priority: 15.12.2022 CN 202211613491
(71) Applicant: BYD Company Limited, Shenzhen, Guangdong 518118 (CN)
(72) Inventor: LIU, Tingting, Shenzhen, Guangdong 518118 (CN); XIONG, Wei, Shenzhen, Guangdong 518118 (CN); YAO, Yugang, Shenzhen, Guangdong 518118 (CN); LU, Daolin, Shenzhen, Guangdong 518118 (CN)
(74) Representative: Taor, Simon Edward William
(86) International application number: PCT/CN2023/105038
(87) International publication number: WO 2024/124877

(57) **Abstract**

A brake (100), a brake system, and a vehicle. The brake (100) comprises: a hydraulic cylinder (10), the hydraulic cylinder (10) having a brake hole (11), and the brake hole (11) being provided with a piston assembly (60) capable of moving in the axial direction of the brake hole (11); a limiting support (20), the limiting support (20) being fixed to the hydraulic cylinder (10) and covering the braking hole (11); and a push rod (30), the push rod (30) passing through the limiting support (20) and being connected to a piston (12), and the push rod (30) being adapted to drive the piston assembly (60) to move in the axial direction of the brake hole (11); and an elastic element (40), the elastic element (40) being arranged on the limiting support (20) and opposite to the piston assembly (60), and the elastic element (40) being adapted to abut against the piston assembly (60) for limiting same.

## Description

### CROSS-REFERENCE TO RELATED APPLICATIONS

The present disclosure claims priority to and benefits of Chinese Patent Application No. 202211613491.8, filed on December 15, 2022. The entire content of the above-referenced application is incorporated herein by reference.

### FIELD

The present disclosure relates to the field of vehicles, and specifically, to a brake, a brake system, and a vehicle.

### BACKGROUND

In the related art, an existing brake includes a hydraulic cylinder, a piston, and a limiting support. The piston is movably arranged in the hydraulic cylinder. The piston is in transmission connection with a brake pedal of a vehicle. During return of the brake pedal, the piston collides with the limiting support. The piston comes into rigid contact with the limiting support, causing big working noise of the brake during the return of the brake pedal, and generating abnormal sound. In this way, noise, vibration, and harshness (NVH) performance of the entire vehicle is reduced.

### SUMMARY

The present disclosure intends to resolve at least one of technical problems in the related art to some extent.

Therefore, an objective of the present disclosure is to provide a brake. A piston assembly of the brake abuts against an elastic element during return of a brake pedal. This can reduce collision noise during return of the piston assembly, thereby improving NVH performance of an entire vehicle.

Another objective of the present disclosure is to provide a brake system.

Another objective of the present disclosure is to provide a vehicle.

The brake according to the present disclosure includes: a hydraulic cylinder, a limiting support, a push rod, and an elastic element.

The hydraulic cylinder has a brake hole. The brake hole is provided with a piston assembly capable of moving along an axial direction of the brake hole.

The limiting support is fixed to the hydraulic cylinder and covers the brake hole.

The push rod passes through the limiting support and is connected to the piston assembly. The push rod is configured to drive the piston assembly to move along the axial direction of the brake hole.

The elastic element is arranged on the limiting support and opposite to the piston assembly. The elastic element is configured to abut against the piston assembly for limiting same.

According to the brake in the present disclosure, the elastic element is arranged, and the piston assembly abuts against the elastic element during return of a brake pedal of a vehicle, to avoid direct collision between the piston assembly and the limiting support. This can reduce collision noise during return of the piston assembly, thereby improving NVH performance of the entire vehicle.

The brake system according to the present disclosure includes the foregoing brake.

According to the brake system in the present disclosure, collision noise during return of a piston can be reduced, thereby reducing working noise of the brake system, and improving NVH performance of an entire vehicle.

The vehicle according to the present disclosure includes the foregoing brake system.

According to the vehicle in the present disclosure, the foregoing brake system is arranged, thereby improving NVH performance of an entire vehicle.

Other aspects and advantages of the present disclosure will be given in the following description, some of which will become apparent from the following description or may be learned from practices of the present disclosure.

### BRIEF DESCRIPTION OF THE DRAWINGS

FIG. 1 is an exploded view of a hydraulic cylinder, a push rod, a piston, an elastic element and a limiting support according to an embodiment of the present disclosure;
FIG. 2 is a cross-sectional view of a limiting support according to an embodiment of the present disclosure;
FIG. 3 is a schematic diagram of an elastic element according to an embodiment of the present disclosure; and
FIG. 4 is a schematic diagram of an elastic element according to an embodiment of the present disclosure from another angle.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary and merely used for explaining the present disclosure, and should not be construed as a limitation on the present disclosure.

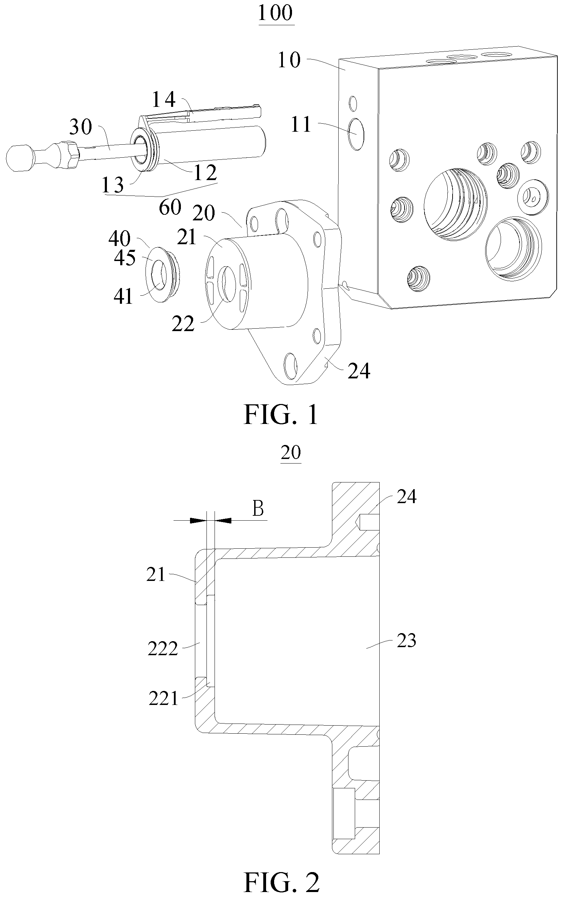

Referring to FIG. 1 to FIG. 4, a brake 100 according to the embodiments of the present disclosure is described below. The brake 100 may be mounted on a vehicle. However, the present disclosure is not limited thereto. The brake 100 may also be arranged on another device requiring the brake 100. The present disclosure is described by using the brake 100 arranged on the vehicle as an example.

As shown in FIG. 1 to FIG. 4, the brake 100 according to the embodiments of the present disclosure includes: a hydraulic cylinder 10, a limiting support 20, a push rod 30, and an elastic element 40. The hydraulic cylinder 10 has a brake hole 11. The brake hole 11 is provided with a piston assembly 60 capable of moving along an axial direction of the brake hole 11, which may also be understood as that the piston assembly 60 may move relative to the hydraulic cylinder 10 along the axial direction of the brake hole 11. A part of a structure of the piston assembly 60 is mounted in the brake hole 11. The limiting support 20 is fixed to the hydraulic cylinder 10 and covers the brake hole 11. It needs to be noted that the limiting support 20 is arranged outside the hydraulic cylinder 10. The limiting support 20 may be fixedly mounted on the hydraulic cylinder 10 through a threaded fastener (for example, a bolt or a screw). The limiting support 20 may alternatively be clamped on the hydraulic cylinder 10. The push rod 30 passes through the limiting support 20 and is connected to the piston assembly 60. The push rod 30 is configured to drive the piston assembly 60 to move along the axial direction of the brake hole 11. It needs to be noted that one end of the push rod 30 may be in direct or indirect transmission connection with a brake pedal of the vehicle, and the other end of the push rod 30 may be in direct or indirect transmission connection with the piston assembly 60. When the brake pedal is stumped on, the push rod 30 drives the piston assembly 60 to move in the brake hole 11 along a direction away from the limiting support 20. During return of the brake pedal, the push rod 30 drives the piston assembly 60 to move in the brake hole 11 along a direction close to the limiting support 20.

The elastic element 40 is an elastic member. For example, the elastic element 40 may be a rubber member. However, the present disclosure is not limited thereto. The elastic element 40 may alternatively be made of another elastic material. The elastic element 40 is arranged on the limiting support 20, and the elastic element 40 is arranged opposite to the piston assembly 60. The elastic element 40 is configured to abut against the piston assembly 60 for limiting same. It needs to be noted that the elastic element 40 may be fixedly mounted on the limiting support 20. The elastic element 40 and the limiting support 20 may be integrally formed. The elastic element 40 may alternatively be detachably mounted on the limiting support 20. The present disclosure is described by using the elastic element 40 detachably mounted on the limiting support 20 as an example. The elastic element 40 is arranged opposite to the piston assembly 60 along the axial direction of the brake hole 11.

When the brake pedal is stumped on, the push rod 30 drives the piston assembly 60 to move in the brake hole 11 along the direction away from the limiting support 20. During the return of the brake pedal, the push rod 30 drives the piston assembly 60 to move in the brake hole 11 along the direction close to the limiting support 20. When the piston assembly 60 returns to an original position, the piston assembly 60 abuts against the elastic element 40 for limiting the same. The elastic element 40 stops the piston assembly 60, to avoid direct collision between the piston assembly 60 and the limiting support 20. Due to certain elasticity of the elastic element 40, the elastic element 40 may absorb collision energy. This can reduce collision noise during return of the piston assembly 60, thereby improving NVH performance of the entire vehicle. Moreover, the brake 100 in the present disclosure has a simple structure and is easy to be assembled.

Therefore, the elastic element 40 is arranged, and the piston assembly 60 abuts against the elastic element 40 during the return of the brake pedal of the vehicle, to avoid the direct collision between the piston assembly 60 and the limiting support 20. This can reduce the collision noise during the return of the piston assembly 60, thereby improving the NVH performance of the entire vehicle.

In some embodiments of the present disclosure, as shown in FIG. 1, the piston assembly 60 includes a piston 12 and a sleeve 13. The sleeve 13 is fixed to an end portion of the piston 12 along an axial direction of the piston 12. The elastic element 40 is configured to abut against the sleeve 13 for limiting same. The brake further includes a support rod hole adjacent to the brake hole 11. An axis of the support rod hole is parallel with an axis of the brake hole 11. The brake further includes a support rod 14 fixedly connected to the piston assembly 60. The support rod 14 is fixedly connected to the sleeve 13. An axis of the support rod 14 is parallel with an axis of the piston 12. When the push rod 30 drives the piston assembly 60 to move along the axial direction of the brake hole 11, the support rod 14 synchronously moves along the axis of the support rod hole. The brake further includes a signal generator (for example, a magnet) and a signal receiver sensing the signal generator. The signal generator is fixedly connected to the support rod 14. The signal receiver is arranged on the hydraulic cylinder 10. The signal receiver is configured to detect a displacement signal after the sleeve 13 is separated from the elastic element 40. During the return of the brake pedal, the push rod 30 drives the piston assembly 60 to move in the brake hole 11 along the direction close to the limiting support 20. When the piston assembly 60 returns to the original position, the sleeve 13 abuts against the elastic element 40 for limiting the same.

In some embodiments of the present disclosure, as shown in FIG. 1, the limiting support 20 has an end wall 21 opposite to the piston assembly 60. The elastic element 40 is arranged on the end wall 21. The push rod 30 passes through the elastic element 40. As shown in FIG. 1 and FIG. 2, the limiting support 20 defines a mounting groove 23 open at one end. A bottom wall of the mounting groove 23 is configured as the end wall 21 opposite to the piston assembly 60. A flange mounting portion 24 is arranged on an end portion of a side wall of the mounting groove 23 away from the end wall 21. The flange mounting portion 24 is fixedly connected to the hydraulic cylinder 10. The flange mounting portion 24 may be mounted on the hydraulic cylinder 10 through a bolt or a screw. The elastic element 40 is mounted on the limiting support 20. The elastic element 40 is sleeved on an outer side of the push rod 30, to cause the push rod 30 to pass through the elastic element 40. The elastic element 40 is arranged on the end wall 21, and the push rod 30 passes through the elastic element 40, to cause the push rod 30 to be connected to the piston assembly 60. This can make arrangement positions of the elastic element 40 and the push rod 30 appropriate, thereby reducing difficulty of manufacturing the brake 100.

In some embodiments of the present disclosure, as shown in FIG. 1, the end wall 21 of the limiting support 20 is provided with a first assembly hole 22. The elastic element 40 is mounted in the first assembly hole 22. In some embodiments of the present disclosure, the elastic element 40 is sleeved on the first assembly hole 22, which may also be understood as that the elastic element 40 is arranged in the first assembly hole 22. The elastic element 40 is provided with a second assembly hole 41. The push rod 30 passes through the second assembly hole 41. The first assembly hole 22 passes through the end wall 21 along a thickness direction of the end wall 21 of the limiting support 20. The second assembly hole 41 passes through the elastic element 40 along an axial direction of the elastic element 40. A central axis of the second assembly hole 41 is parallel with a central axis of the first assembly hole 22. Further, the central axis of the second assembly hole 41 is collinear with the central axis of the first assembly hole 22. Through such an arrangement, the elastic element 40 can be mounted on the end wall 21 of the limiting support 20, and the push rod 30 can also pass through the elastic element 40.

In some embodiments of the present disclosure, as shown in FIG. 1 to FIG. 3, the elastic element 40 may include: a sleeve body 42 and a first limiting flange 43. An inner ring wall of the sleeve body 42 forms the second assembly hole 41. The sleeve body 42 is mounted in the first assembly hole 22. It needs to be noted that the sleeve body 42 is mounted in the first assembly hole 22, and the sleeve body 42 defines the second assembly hole 41. The second assembly hole 41 passes through the sleeve body 42 along the axial direction of the elastic element 40. The first limiting flange 43 is arranged on an outer circumferential wall of the sleeve body 42. The first limiting flange 43 extends around the sleeve body 42 from the outer circumferential wall of the sleeve body 42. The first limiting flange 43 is configured to abut against the sleeve 13 of the piston assembly 60 for limiting same. Further, the first limiting flange 43 and the sleeve body 42 may be integrally formed. The first limiting flange 43 is arranged around the sleeve body 42 along a circumferential direction of the sleeve body 42. During the return of the brake pedal, the push rod 30 drives the piston 12 to move in the brake hole 11 along the direction close to the limiting support 20. When the piston 12 returns to the original position, the sleeve 13 abuts against the first limiting flange 43. This can avoid collision between the piston assembly 60 and the limiting support 20.

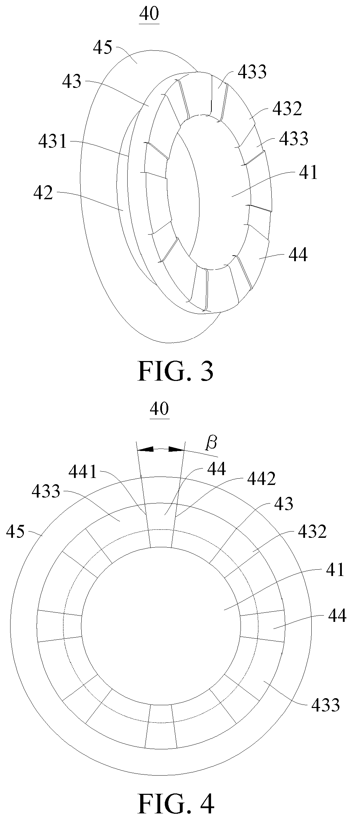

In some embodiments of the present disclosure, as shown in FIG. 3 and FIG. 4, the first limiting flange 43 has a first side surface 431 and a second side surface 432 oppositely arranged along the axial direction of the elastic element 40. The first side surface 431 abuts against the end wall 21. The second side surface 432 is configured to abut against the piston assembly 60. After the elastic element 40 is mounted in the first assembly hole 22, the first limiting flange 43 is located in the mounting groove 23. The first side surface 431 of the first limiting flange 43 is arranged opposite to the end wall 21. The first side surface 431 of the first limiting flange 43 abuts against an inner surface of the end wall 21. The second side surface 432 of the first limiting flange 43 is arranged opposite to the piston assembly 60. During the return of the brake pedal, the push rod 30 drives the piston 12 to move in the brake hole 11 along the direction close to the limiting support 20. When the piston 12 returns to the original position, the piston assembly 60 abuts against the second side surface 432, to cause the piston assembly 60 to come into surface contact with the elastic element 40. This can ensure a contact area between the piston assembly 60 and the elastic element 40, so that the elastic element 40 can better limit the piston 12. In this way, the collision between the piston assembly 60 and the limiting support 20 can be further avoided, thereby better improving the NVH performance of the entire vehicle.

In some embodiments of the present disclosure, a limiting structure configured to increase a roughness of the second side surface 432 is arranged on the second side surface 432. The limiting structure may be arranged as at least one of a printed groove structure recessed toward the inside of the first limiting flange 43 and a printed protruding structure protruding from the first limiting flange 43. The limiting structure is arranged on the second side surface 432, so that the roughness of the second side surface 432 can be increased. In this way, when the piston assembly 60 comes into contact with the second side surface 432, friction of a contact surface between the second side surface 432 and the piston assembly 60 can be increased, thereby avoiding slippage between the piston assembly 60 and the elastic element 40.

In some embodiments of the present disclosure, as shown in FIG. 3 and FIG. 4, at least one avoidance groove 433 may be arranged on the second side surface 432. The quantity of avoidance grooves 433 arranged on the second side surface 432 is one or more. The avoidance groove 433 is arranged on the second side surface 432, so that a contact area between the elastic element 40 and the piston assembly 60 can be reduced, and adhesion between the elastic element 40 and the piston assembly 60 can be relieved. In this way, when the piston assembly 60 collides with the elastic element 40, collision noise during the return of the piston assembly 60 can be further reduced, thereby further improving the NVH performance of the entire vehicle.

In some embodiments of the present disclosure, as shown in FIG. 3 and FIG. 4, multiple avoidance groove 433 may be provided. The multiple avoidance grooves 433 are successively arranged at intervals along a circumferential direction of the first limiting flange 43, to form a boss 44 between two adjacent avoidance grooves 433. Further, the multiple avoidance grooves 433 are successively and evenly arranged at intervals along the circumferential direction of the first limiting flange 43. A spacing between any two adjacent avoidance grooves 433 is the same. The multiple avoidance grooves 433 are arranged on the second side surface 432, and the boss 44 is formed between the two adjacent avoidance grooves 433. In this way, when the piston assembly 60 collides with the first limiting flange 43, the boss 44 comes into contact with the piston assembly 60, so that the contact area between the elastic element 40 and the piston assembly 60 can be further reduced, and the adhesion between the elastic element 40 and the piston assembly 60 can be better relieved. In this way, when the piston assembly 60 collides with the elastic element 40, the collision noise during the return of the piston assembly 60 can be further reduced, thereby further improving the NVH performance of the entire vehicle.

In some embodiments of the present disclosure, as shown in FIG. 4, each of bosses 44 has a first surface 441 and a second surface 442 oppositely arranged along the circumferential direction of the first limiting flange 43. An angle β is formed between the first surface 441 and the second surface 442 of at least one boss 44. Further, the angle β is formed between the first surface 441 and the second surface 442 of each of the bosses 44, and 0°<β. Through such an arrangement, structural strength of the boss 44 can be enhanced, so that a deformation amount of the elastic element 40 can be reduced. However, the present disclosure is not limited thereto. The first surface 441 and the second surface 442 of the boss 44 may be parallel to each other, and in this case, β is 0°.

In some embodiments of the present disclosure, as shown in FIG. 2 and FIG. 3, the first assembly hole 22 has a first hole section 221 and a second hole section 222 connected to each other, and the first hole section 221 is located at an end of the second hole section 222 close to the hydraulic cylinder 10. As shown in FIG. 2, the first hole section 221 is located at an end of the second hole section 222 close to the mounting groove 23. A diameter of the first hole section 221 is greater than a diameter of the second hole section 222. The first limiting flange 43 is assembled in the first hole section 221. A shape of the first limiting flange 43 matches with a shape of the first hole section 221. For example, when the first limiting flange 43 is circular, the first hole section 221 is a circular hole. An outer diameter of the first limiting flange 43 is less than or equal to the diameter of the first hole section 221. Through such an arrangement, it can be ensured that the first limiting flange 43 is assembled in the first hole section 221.

Further, after the first limiting flange 43 is assembled in the first hole section 221, the first limiting flange 43 may have an interference fit with the first hole section 221, so that the elastic element 40 can be reliably assembled in the first assembly hole 22.

In some embodiments of the present disclosure, as shown in FIG. 2 and FIG. 3, a thickness A of the first limiting flange 43 and a depth B of the first hole section 221 satisfy a relational expression: B≤A. After the first limiting flange 43 is assembled in the first hole section 221, through such an arrangement, the first limiting flange 43 can be parallel with the inner surface of the end wall 21, or the first limiting flange 43 can protrude from the inner surface of the end wall 21. In this way, when the piston 12 returns to the original position, it can be ensured that the piston 12 does not collide with the limiting support 20.

In some embodiments of the present disclosure, as shown in FIG. 1 to FIG. 3, the elastic element 40 may further include a second limiting flange 45. The second limiting flange 45 is arranged on the outer circumferential wall of the sleeve body 42. The second limiting flange 45 extends around the sleeve body 42 from the outer circumferential wall of the sleeve body 42. The second limiting flange 45 extends around the sleeve body 42 along the circumferential direction of the sleeve body 42. The first limiting flange 43 and the second limiting flange 45 are spaced away from each other along the axial direction of the elastic element 40. The first limiting flange 43 and the second limiting flange 45 are respectively arranged at two axial ends of the elastic element 40. After the elastic element 40 is mounted on the limiting support 20, the second limiting flange 45 is located outside the limiting support 20, and the second limiting flange 45 abuts against an outer wall opposite to the end wall 21. The second limiting flange 45 abuts against an outer surface of the end wall 21. The first limiting flange 43 is located in the mounting groove 23, the first limiting flange 43 abuts against the inner surface of the end wall 21, and the second limiting flange 45 abuts against the outer surface of the end wall 21. In this way, the elastic element 40 can be prevented from moving out of the first assembly hole 22, so that the elastic element 40 can be tightly assembled on the limiting support 20, thereby preventing the limiting support 20 from being separated from the elastic element 40.

In some embodiments of the present disclosure, an outer surface of the elastic element 40 may be provided with a non-stick coating. The non-stick coating may be arranged as a Teflon coating. The non-stick coating is configured to relieve adhesion between the elastic element 40 and a metal member (for example, the piston 12). In this way, when the piston assembly 60 collides with the elastic element 40, the collision noise during the return of the piston assembly 60 can be further reduced, thereby further improving the NVH performance of the entire vehicle.

In some embodiments of the present disclosure, the elastic element 40 may withstand a temperature range from at least -40°C to 120°C. Optional materials for manufacturing the elastic element 40 may include silica gel, ethylene propylene diene monomer, and the like.

In some embodiments of the present disclosure, a central axis of the limiting support 20 is parallel with a central axis of the piston assembly 60. For example, the central axis of the limiting support 20 coincides with the central axis of the piston assembly 60. Further, the central axis of the piston assembly 60 is parallel with the central axis of the brake hole 11. For example, the central axis of the piston assembly 60 coincides with the central axis of the brake hole 11. Through such an arrangement, the piston assembly 60 and the push rod 30 are easily assembled, and a structure of the brake 100 is simplified, thereby facilitating production and manufacturing of the brake 100.

Other compositions of the brake 100 according to the embodiments of the present disclosure, such as the piston 12, are known to those of ordinary skill in the related art and are not be described in detail herein.

A brake system according to an embodiment of the present disclosure is provided. The brake system may be an electrically controlled brake system or a wire-controlled brake system. The brake system includes the brake 100 in the foregoing embodiment. This can reduce collision noise during return of a piston 12, and reduces working noise of the brake system, thereby improving NVH performance of an entire vehicle.

A vehicle according to an embodiment of the present disclosure is provided. The vehicle includes the brake system in the foregoing embodiments, thereby improving NVH performance of the entire vehicle.

In the description of the present disclosure, the description of the reference terms such as "an embodiment", "some embodiments", "exemplary embodiments", "example", "specific example", or "some examples" means that the specific features, structures, materials, or characteristics described with reference to the embodiment or example are included in at least one embodiment or example of the present disclosure. In the present disclosure, schematic descriptions of the foregoing terms do not necessarily refer to the same embodiment or example. In addition, the described specific features, structures, materials, or characteristics may be combined in any one or more embodiments or examples in an appropriate manner.

Although the embodiments of the present disclosure have been shown and described, those of ordinary skill in the related art should understand that various changes, modifications, replacements, and variations may be made to the embodiments without departing from the principle and spirit of the present disclosure, and the scope of the present disclosure is defined by the appended claims and equivalents thereof.

## Claims

1. A brake (100), comprising:
a hydraulic cylinder (10), the hydraulic cylinder (10) having a brake hole (11), and the brake hole (11) being provided with a piston assembly (60) capable of moving along an axial direction of the brake hole (11);
a limiting support (20), the limiting support (20) being fixed to the hydraulic cylinder (10) and covering the brake hole (11);
a push rod (30), the push rod (30) passing through the limiting support (20) and being connected to the piston assembly (60), and the push rod (30) being configured to drive the piston assembly (60) to move along the axial direction of the brake hole (11); and
an elastic element (40), the elastic element (40) being arranged on the limiting support (20) and opposite to the piston assembly (60), and the elastic element (40) being configured to abut against the piston assembly (60) for limiting same.

2. The brake (100) according to claim 1, wherein the limiting support (20) has an end wall (21) opposite to the piston assembly (60), the elastic element (40) is arranged on the end wall (21), and the push rod (30) passes through the elastic element (40).

3. The brake (100) according to claim 2, wherein the end wall (21) is provided with a first assembly hole (22), the elastic element (40) being mounted in the first assembly hole (22), and the elastic element (40) is provided with a second assembly hole (41), the push rod (30) passing through the second assembly hole (41).

4. The brake (100) according to claim 3, wherein the elastic element (40) comprises: a sleeve body (42) and a first limiting flange (43), an inner ring wall of the sleeve body (42) forming the second assembly hole (41), the first limiting flange (43) extending around the sleeve body (42) from an outer circumferential wall of the sleeve body (42), and the first limiting flange (43) being configured to abut against the piston assembly (60) for limiting same.

5. The brake (100) according to claim 4, wherein the elastic element (40) is sleeved on the first assembly hole (22).

6. The brake (100) according to claim 4, wherein the first limiting flange (43) has a first side surface (431) and a second side surface (432) oppositely arranged along an axial direction of the elastic element (40), the first side surface (431) abutting against the end wall (21), and the second side surface (432) being configured to abut against the piston assembly (60).

7. The brake (100) according to claim 6, wherein a limiting structure configured to increase a roughness of the second side surface (432) is arranged on the second side surface (432).

8. The brake (100) according to claim 6 or 7, wherein at least one avoidance groove (433) is arranged on the second side surface (432).

9. The brake (100) according to claim 8, wherein a plurality of avoidance groove (433) are provided, and the plurality of avoidance grooves (433) are successively arranged at intervals along a circumferential direction of the first limiting flange (43), to form a boss (44) between two adjacent avoidance grooves (433).

10. The brake (100) according to claim 9, wherein each of bosses (44) has a first surface (441) and a second surface (442) oppositely arranged along the circumferential direction of the first limiting flange (43), an angle β being formed between the first surface (441) and the second surface (442) of at least one boss (44).

11. The brake (100) according to any one of claims 4 to 10, wherein the first assembly hole (22) has a first hole section (221) and a second hole section (222) connected to each other, the first hole section (221) being located at an end of the second hole section (222) close to the hydraulic cylinder (10), a diameter of the first hole section (221) being greater than a diameter of the second hole section (222), and the first limiting flange (43) being assembled in the first hole section (221).

12. The brake (100) according to claim 11, wherein a thickness A of the first limiting flange (43) and a depth B of the first hole section (221) satisfy a relational expression: B≤A.

13. The brake (100) according to any one of claims 4 to 12, wherein the elastic element (40) further comprises: a second limiting flange (45), the second limiting flange (45) extending around the sleeve body (42) from the outer circumferential wall of the sleeve body (42), the first limiting flange (43) and the second limiting flange (45) being spaced away from each other along the axial direction of the elastic element (40), and the second limiting flange (45) being located outside the limiting support (20) and abutting against an outer wall opposite to the end wall (21).

14. The brake (100) according to any one of claims 1 to 13, wherein an outer surface of the elastic element (40) is provided with a non-stick coating.

15. The brake (100) according to any one of claims 1 to 13, wherein the piston assembly (60) comprises a piston (12) and a sleeve (13), the sleeve (13) being fixed to an end portion of the piston (12) along an axial direction of the piston (12), and the elastic element (40) being configured to abut against the sleeve (13) for limiting same.

16. The brake (100) according to claim 15, further comprising a support rod hole adjacent to the brake hole (11), an axis of the support rod hole being parallel with an axis of the brake hole (11);
further comprising a support rod (14) fixedly connected to the piston assembly (60), the support rod (14) being fixedly connected to the sleeve (13), an axis of the support rod (14) being parallel with an axis of the piston (12), and the support rod (14) synchronously moving along the axis of the support rod hole when the push rod (30) drives the piston assembly (60) to move along the axial direction of the brake hole (11); and
further comprising a signal generator and a signal receiver sensing the signal generator, the signal generator being fixedly connected to the support rod (14), the signal receiver being arranged on the hydraulic cylinder (10), and the signal receiver being configured to detect a displacement signal after the sleeve (13) is separated from the elastic element (40).

17. A brake system, comprising the brake (100) according to any one of claims 1 to 16.

18. A vehicle, comprising the brake system according to claim 17.
